# EUROPEAN PATENT APPLICATION

(11) **EP 2 187 253 A1**
(43) Date of publication of application: **19.05.2010**
(21) Application number: 08020044.7
(22) Date of filing: 17.11.2008
(51) Int. Cl.: G02F 1/01

(54) **Electrically controllable optical element using an optical fibre**

(71) Applicant: SWET OPTICS GMBH, 60559 Frankfurt am Main (DE)
(72) Inventor: Petrov, Victor, Prof., St. Petersburg (RU)
(74) Representative: Heinze, Ekkehard

(57) **Abstract**

An electrically controllable optical element comprising a piece of electro-optical material (3), having a surface on which a Bragg phase grating (7) having a longitudinal extension is provided, electrodes (15) which are arranged on said surface at both sides of the Bragg grating (7), and an optical fibre (5) comprising a core (9) and a cladding (11), having a portion of its longitudinal extension which is, at least in part of the fibre's circumference, free of the cladding (11), which has been partly removed such as to form a plane surface (13), wherein the fibre (5) is in optical contact with said piece of electro-optical material (3) such that its longitudinal extension matches with the longitudinal extension of the Bragg grating (7) and said portion which is free of the cladding (11) is adjacent to said surface where the Bragg grating (7) is provided, wherein a beam of optical radiation propagating along the said optical fibre (5) is controllable by means of a voltage applied to said electrodes (15). Thereby the diffraction characteristics of the interface between the Bragg grating (7) and the plane surface (13) of the core (9) pressed against the electro-optical substrate (3) is changed.

## Description

The invention refers to an electrically controllable optical element. Such element may be used to produce narrow-band filters with a broad wave spectrum of changeover to wavelength, and for the production of selective optical attenuators and modulators of light and optical equalisers.

Well-known methods of spectral filtering of optical radiation are based on the diffraction of radiation in Bragg phase gratings that have been fixed and written into a photoreflective crystal [G. A. Rakuljic, V. Leyva -"Volume holographic narrow-band optical filter". -Opt. Lett. - 1993, Vol. 18, N 6 p.p. 459-461]. It is possible to use both the volume and also the wave guiding design of Bragg phase gratings [J. Hukriede, I. Nee, D. Kip, E. Kraetzig - "Thermally fixed reflection gratings for infrared light in LiNb03:Ti:Fe Channel waveguides". - Opt. Lett. - 1998, Vol. 23, N 17, p.p. 1405-1407].

For modifying the filter characteristics, an electric field can be applied transverse to the direction of propagation of the light beam [R. Muller, J. V. Alvarez-Bravo, L. Arizmendi, J.M. Cabrera. - "Tuning of photorefractive interference filters in LiNbO3. - J. Phys. D: Appl. Phys. - 1994, Vol 27, p.p. 1628-1632].

On modification of the electric field strength, the filter is converted by virtue of the fact that a specific wavelength of the radiation to be filtered is chosen. The waveguide design enables generation of control fields at a relatively low applied voltage, due to a very small distance between the electrodes (10 µm).

A corresponding method for electrically controlling a holographic optical filter in the photorefractive crystal is known in which a spatially homogeneous field is created in the crystal by the application of a constant voltage to the crystal [M.P. Petrov, V.M. Petrov, A. V. Chamrai, C. Denz, T. Tschudi. -"Electrically controlled holographic optical filter". - Proc. 27th Eur. Conf. on Opt. Comm. (ECOC'01 - Amsterdam). - Th.F.3.4, p.p. 628-629 (2001)].

Furthermore, an electrical switch is known (WO 00/02098) that contains a paraelectrical photorefractive material in which at least one holographic grating is formed, with two electrodes that are applied onto the opposite edges of the material to apply an external electric field.

From US 4,039,249 A, a process of an optical switch is known. This process is based on a squared electro-optical effect. This effect enables electrical activation of the holographic grating written into the paraelectrical grating. Activation is generated by the interaction of the spatially modulated distribution of the electric field that constitutes the holographic grating within the crystal and effect of the spatially homogeneous external electric field. This known process makes it possible to switch over the light, both in the direction of propagation and also depending on the wavelength.

In US 5,832,148 A, a further controllable optical element is described. It is based on a substrate on which a thin film of an electro-optical material has been applied that has a higher refraction index than that of the substrate itself. The film lying at the top is used as an optical waveguide. In an enhancement of this a specific electro-optical material (LiNbO₃) is used as the substrate and the optical waveguide is formed by the diffusion of an intermediate layer of titanium ions. Long-drawn electrodes are applied onto the surface of the electro-optical layer and a controlling voltage source is connected to them. The Bragg phase grating is written into the waveguide layer. The latter filter has a very high spectral selectivity and performs the function of an electrically tuneable narrow-band optical filter. However, the wavelength band of tuneability of such a filter is limited by the voltage of electrical disruptive discharge and, in the case of the filter based on the crystal LiNbO₃ exceeds no more than 1 nm.

In the applicant's WO 2007/033805 A1, an optical element of the above discussed general type is described, wherein the Bragg phase grating is equipped with means of forming a spatially inhomogeneous external electrical field, to further extend the options for controlling optical parameters of a functional optical unit containing such an optical element.

In this optical element, the Bragg phase grating is made as periodical elevations and indentations in a waveguide which is formed in an electro-optical substrate in a direction of propagation of a light beam.

Practically, a proper quality waveguide can be produced only in a LiNbO₃ substrate. However, a promising and attractive electro-optical material for producing an optical element as mentioned above is BaTiO₃ (barium titanate). It exhibits an electro-optical coefficient approximately 40 times higher, in comparison with LiNbO₃. Consequently, one can expect a 40 times higher tuning spectral range. Unfortunately, due to some fundamental reasons, it is practically impossible to produce an optical waveguide in this material.

Therefore, it is an object of the invention to provide an improved electrically controllable optical element of the above type which, in particular, has an extended tuning spectral range.

This object is solved by an electrically controllable element according to claim 1. Preferred embodiments of the invention are subject of the dependent claims.

The electrically controllable optical element consists, in an embodiment, of a piece of electro-optical material and the profiled Bragg grating, produced (or, deposited) on the surface of the material. The profiled Bragg grating means periodical variations of the thickness of the material. The grating is covered by the optical fibre, processed in the following way: The part of cladding of the fibre is removed. The grating is covered by the originated plane surface. The core of the fibre is in contact with the grating. Additional pieces of cladding are also removed in order to cover the deposited electrodes. Thus, the Bragg grating has been placed at the border - between the cladding and the core. The light wave propagates along the optical fibre. The main part of light intensity propagates along the central axis of the waveguide. The rest propagates out of the core - along the cladding. This part of the wave interacts with the Bragg grating.

The above embodiment comprises an optical fibre which has been produced with a cladding completely surrounding its circumference but the cladding of which afterwards has been removed (only) in the portion which is in contact with the Bragg grating. In an alternative embodiment, the optical element may comprise a piece of optical fibre which is completely free of any cladding, i.e. has a bare core. Specifically, in such alternative embodiment those portions of the core surface which are not in contact with the Bragg grating may be covered with an optically protective material afterwards.

In a further embodiment which is advantageous in particular for its high electro-optical coefficient, the electro-optical material comprises barium titanate. However, other well-known electro-optical materials may be used for the inventive optical element as well.

In a further embodiment, the electrodes are arranged such as to provide a spatially inhomogeneous electric field along the longitudinal extension of the Bragg grating. Such spatially inhomogeneous electric field may provide specific control options but, on the other hand, electrode arrangements which generate a homogeneous field along the optical fibre may be provided as well. For the geometrical details of electrode configurations of both types, explicit reference is made to prior art solutions, in particular to WO 2007/033805 A1.

In a further embodiment, the Bragg grating is formed as periodic elevations and indentations in the surface of the piece of electro-optical material. In an alternative to this latter embodiment, the Bragg grating is coated onto the surface of the piece of electro-optical material and comprises periodic changes of the thickness of the coating.
Figures 1A and 1B show a longitudinal cross section or transversal cross section, respectively, of an optical element of an embodiment of the invention,
Fig. 2 shows the optical element of figures 1A and 1b in an elevational perspective view, and
Figures 3A to 3F show a component of further embodiments of the electro-optical element, i.e. the electro-optical substrate with the Bragg grating and several electrode configurations.

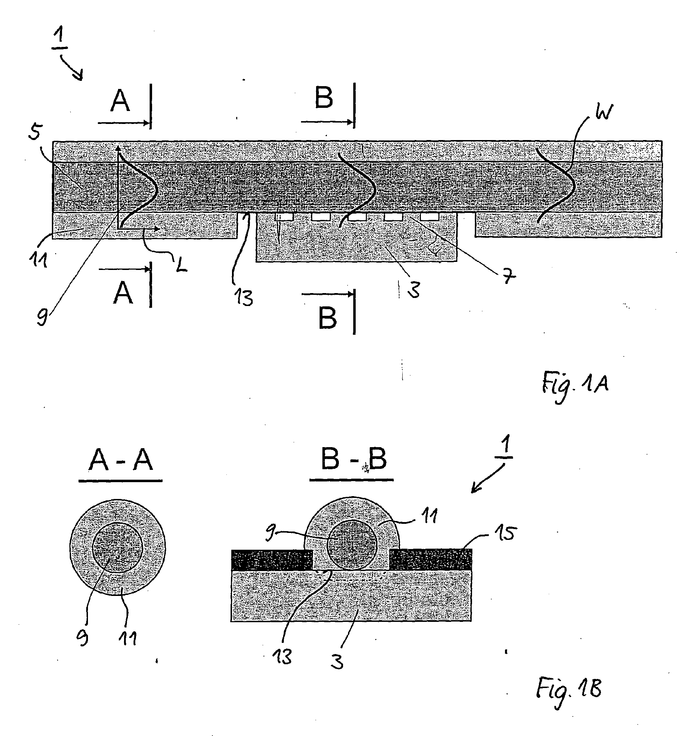

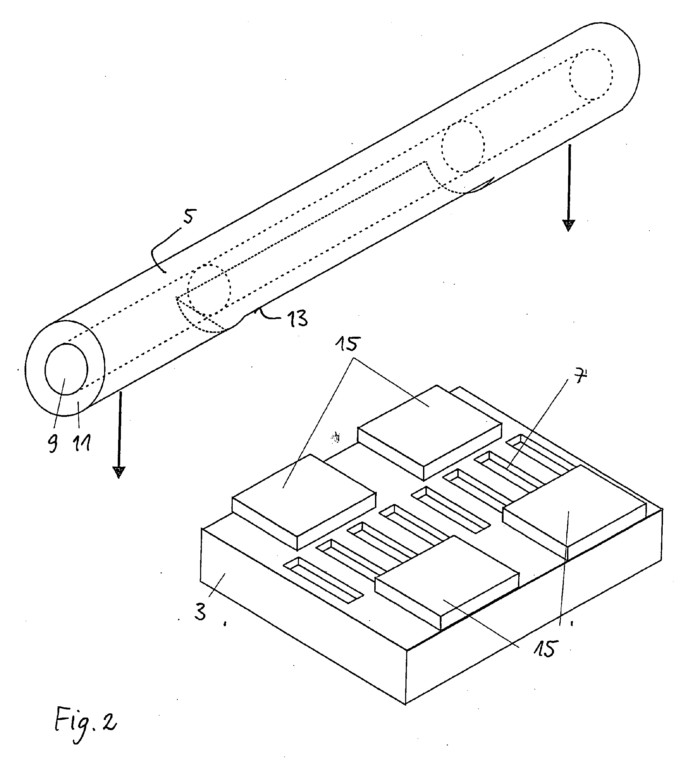

In figures 1A, 1B and 2 an electro-optical element 1 comprising an electro-optical substrate 3 and an optical fibre 5 is schematically illustrated. In the surface of the electro-optical substrate 3, a Bragg phase grating 7 comprising periodic elevations and indentations is provided. The electro-optical fibre 5 comprises a core 9 and a cladding 11, and in a portion of its longitudinal extension, which approximately corresponds to the length of the electro-optical substrate 3, the cladding 11 has been partly removed such as to form a plane surface 13 of the optical fibre. On each side of the Bragg grating 7 in the surface of the electro-optical material 3 a pair of rectangular electrodes 15 is provided.

In the assembled state of the electro-optical element 1, the plane surface 13 of the fibre 3 is pressed onto that portion of the electro-optical element 3 where the Bragg grating 7 is provided, and this assembled state is secured by corresponding fastener means (not shown).

In this state, the electro-optical element may be used for influencing a light (or infrared) wave W which propagates along the longitudinal extension L of the optical fibre 3 and which is schematically shown in fig. 1A. Such influence or control, respectively, is performed by applying an electrical voltage to the electrodes 15 and thereby changing the diffraction characteristics at the interface between the Bragg grating 7 and the bare surface of the core 9 pressed against the electro-optical substrate 3.

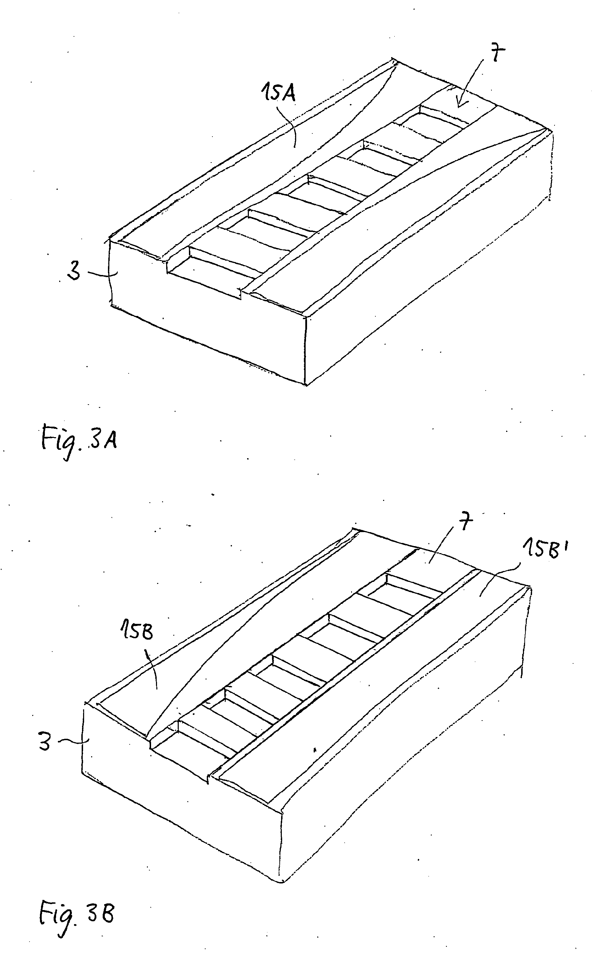

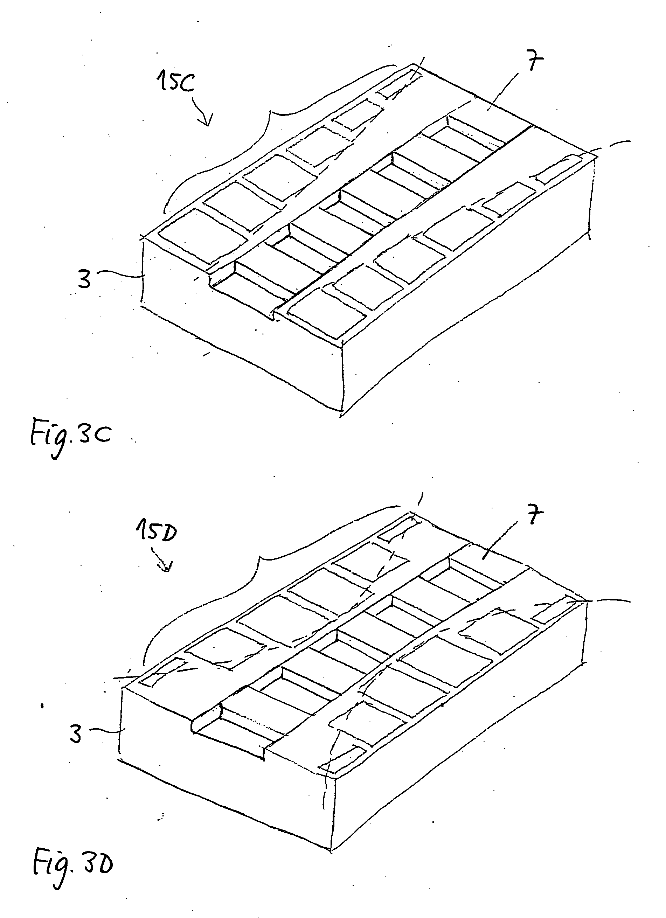

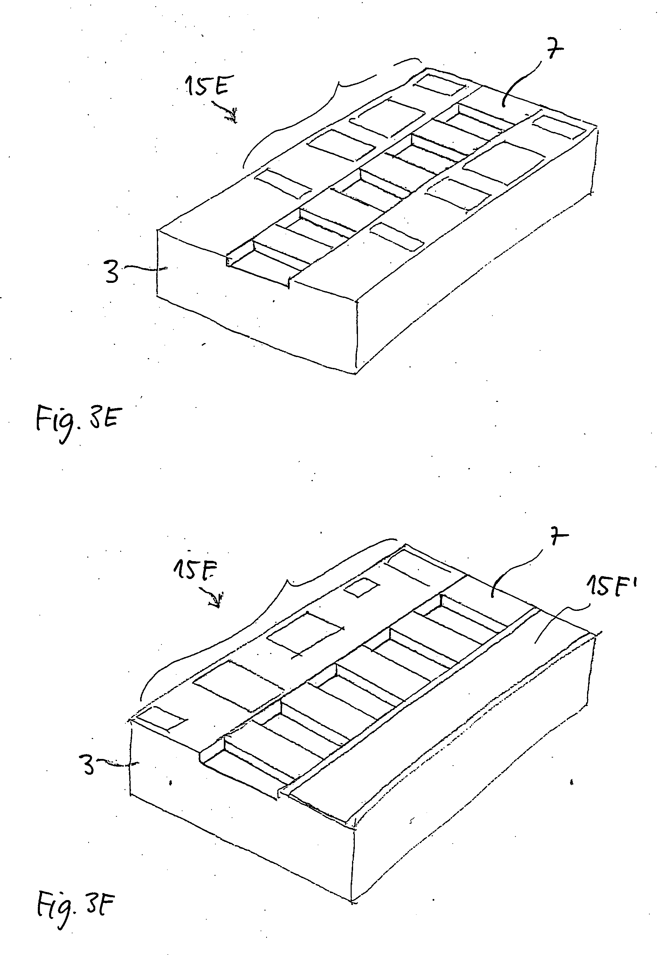

In figures 3A to 3F, modifications of the electrode arrangement with respect to the above embodiment are schematically illustrated. In these figures, for the electro-optical substrate and the Bragg grating the same reference numerals as in figures 1A to 2 are used, whereas the reference numerals for the electrodes vary in each of the figures, as the geometrical shapes of the electrodes arrangements are different. All electrode arrangements shown in figures 3A to 3f are suitable for providing spatially inhomogeneous fields along the extension of the respective Bragg grating, in particular varying in a non-linear way.

All of the specific features and embodiments shown in the figures and explained above are merely determined for illustrating the invention but shall not be interpreted as limiting the scope thereof.

On creation of the necessary spatial distribution of the electrical field in the crystal, a required transfer function of the optical element can be created, which leads to the multifunctional nature of the optical element.

Thus, when the external electrical field modified homogeneously along the direction of radiation propagation is used, the diffraction efficiency of the grating can be substantially reduced, right down to zero. An electrical spectrally selective light switch can be created on this basis. Due to the electrooptical nature of the control, the switching speed of such a switch is very high and can amount to 10-100 GHz.

The diffraction efficiency of the Bragg phase grating can be controlled when the degree of inhomogeneity is altered. In this case, such an element functions as an electrically controlled selective light modulator. The profile of the Braggs phase grating's transfer function can additionally be controlled electrically. Reconfiguration of the transfer function from the state of reflection to the state of forward conduction can serve as an example. This reconfiguration is achieved by virtue of the fact that, on two identical halves of the grating, electrical fields are applied that generate a phase shift equal to π for the light waves reflected by both halves of the grating.

The optical element can act as a universal optical switch with a variable number of spectral channels. A specific number of the formed Braggs phase gratings is located in an inhomogeneous electrical field and therefore its diffraction does not exist. A homogeneous electrical field is applied to other phase gratings. This is why their diffraction exists. This circumstance enables reflection of the selected spectral channels.

The optical element can also act as an electrically controlled optical equaliser. In this case, the diffraction efficiency of each individual elementary grating is defined by the degree of the spatial inhomogeneity of the external electrical field.

The optical element can also act as an narrow-band optical filter with a broad wavelength band.

The optical element can also act as a compensator of optical spectral dispersion.

## Claims

1. Electrically controllable optical element comprising:
- a piece of electro-optical material, having a surface on which a Bragg phase grating having a longitudinal extension is provided,
- electrodes which are arranged on said surface at both sides of the Bragg grating, and
- an optical fibre having a portion of its longitudinal extension which is, at least in part of the fibre's circumference, free of a cladding, wherein the fibre is in optical contact with said piece of electro-optical material such that its longitudinal extension matches with the longitudinal extension of the Bragg grating and said portion which is free of a cladding is adjacent to said surface where the Bragg grating is provided,
wherein a beam of optical radiation propagating along the said optical fibre is controllable by means of a voltage applied to said electrodes.

2. Optical element according to claim 1, wherein said portion of the optical fibre which is free of a cladding is pressed against the surface of said Bragg grating.

3. Optical element according to claim 1 or 2, wherein said optical fibre comprises a cladding surrounding the circumference of its core and being removed in said portion which is free of a cladding.

4. Optical element according to one of the preceding claims, wherein said electro-optical material comprises barium titanate.

5. Optical element according to one of the preceding claims, wherein said electrodes are arranged such as to provide a spatially inhomogeneous electric field along the longitudinal extension of said Bragg grating.

6. Optical element according to one of the preceding claims, wherein said Bragg grating is formed as periodic elevations and indentations in said surface of the piece of electro-optical material.

7. Optical element according to one of claims 1 to 5, wherein said Bragg grating is coated onto said surface of the piece of electro-optical material and comprises periodic changes of the thickness of the coating.
